# EUROPEAN PATENT APPLICATION

(11) **EP 4 852 488 A1**
(43) Date of publication of application: **09.12.2026**
(21) Application number: 26179029.9
(22) Date of filing: 15.05.2026
(51) Int. Cl.: H04W 12/33, G06F 21/44, H04W 12/06

(54) **SYSTEM AND METHOD OF PREVENTING COUNTERFEIT UNLOCKING OF DIGITAL EXPERIENCES ON WEARABLE COMPUTING DEVICES**

(30) Priority: 04.06.2025 US 202519228168
(71) Applicant: Google LLC, Mountain View, CA 94043 (US)
(72) Inventor: Greenwood, Benjamin, Pyrmont, NSW 2009 (AU); Lee, Howard Lewis, Mountain View, 94043 (US)
(74) Representative: Maikowski & Ninnemann Patentanwälte Partnerschaft mbB

(57) **Abstract**

A method of preventing counterfeit unlocking of a wearable computing device including, receiving, via a processor of a wearable computing device, a signal indicative of a band being secured to a housing of the wearable computing device. The method also includes, upon receipt of the signal, causing, via the processor, a visual cue to display on a display of the wearable computing device. The method includes receiving, via the processor, the unique identifier and determining, via the processor, whether the unique identifier corresponds to one of a plurality of recognized unique identifiers programmed in the processor. When the unique identifier corresponds to one of the plurality of recognized unique identifiers programmed in the processor, the method includes causing a digital experience to display on the display. When the unique identifier does not correspond to one of the plurality of recognized unique identifiers programmed in the processor, the method includes prohibiting access to content programmed in the processor.

## Description

### FIELD

The present disclosure relates generally to wearable computing devices and more specifically, to systems and methods of preventing counterfeit unlocking of digital experiences on a wearable computing device.

### BACKGROUND

Recent advances in technology, including those available through consumer devices, have led to corresponding advances in heath detection and monitoring. In recent years, wearable devices, such as watches or personal fitness devices, have gained popularity due to their ability to conveniently monitor the health and fitness data of a user. Further, technological advancements related to the device's ability to provide real-time insights into various health related data points have only expanded the public's focus on health and fitness tracking. For instance, certain wearable devices include a variety of sensors for measuring multiple biological parameters that can be beneficial to a user of the device, such as a heart rate sensor, multipurpose electrical sensors compatible with electrocardiogram (ECG) and electrodermal activity (EDA) applications, infrared sensors, a gyroscope, an altimeter, an accelerometer, a temperature sensor, an ambient light sensor, Wi-Fi, GPS, a vibration sensor, a speaker, and a microphone, among others.

However, as the demand for these devices increases, the risk of counterfeit devices or accessories being distributed within the market also increases. For example, certain wearable devices can be fastened to a user via a band that can be removably coupled to a housing of the wearable device. Typically, such devices use electrical technology to prevent counterfeit unlocking of the device, e.g., using an integrated circuit and metal pins embedded within the band. While this electrical technology is able to prevent counterfeit unlocking of the device, this design can introduce certain considerations. For example, the integrated circuit requires the wearable device to have a processor capable of detecting this electrical connection. Additionally, manufacturing the integrated circuit into the band requires costly hardware as well as software mitigations to deal with potential circuity issues due to water/moisture in the connection area.

As such, the present disclosure is directed to systems and methods of preventing counterfeit unlocking of digital experiences on a wearable computing device that address the aforementioned issues.

### SUMMARY OF THE INVENTION

Aspects and advantages of embodiments of the present disclosure will be set forth in part in the following description, or can be learned from the description, or can be learned through practice of the embodiments.

In an aspect, the present disclosure is directed to a method of preventing counterfeit unlocking of a wearable computing device. The method includes receiving, via a processor of the wearable computing device, a signal indicative of a band being secured to a housing of the wearable computing device. The band includes a wireless communication tag having a unique identifier. In an embodiment, the wireless communication tag may include a near-field communication (NFC) tag, a Radio-Frequency Identification (RFID), or a combination thereof. Upon receipt of the signal, the method includes causing, via the processor, a visual cue to display on a display of the wearable computing device. The visual cue includes instructions that direct a user to engage the wireless communication tag with the housing so as to transmit the unique identifier to the processor. In an embodiment, the band may include a first end and a second end. When the band is attached to the housing of the wearable device, the first end is secured to the housing and the second end is a free end. The visual cue may further include instructions to direct the user to fold the band in a direction so as to touch the free end of the band comprising the wireless communication tag to the display of the wearable computing device. In an embodiment, the wireless communication tag may be embedded in the band.

The method also includes receiving, via the processor, the unique identifier and determining whether the unique identifier corresponds to one of a plurality of recognized unique identifiers which are programmed in the processor. When the unique identifier corresponds to one of the plurality of recognized identifiers programmed in the wearable computing device, the method includes causing a digital experience to display on the display. When the unique identifier does not correspond to one of the plurality of recognized unique identifiers programmed in the processor, the method includes prohibiting access to content programmed in the processor.

If the processor recognizes the unique identifier, by comparing the unique identifier of the wireless communication tag with a plurality of recognized unique identifiers, the wearable computing device may display a digital experience on the display. In embodiments, the digital experience may include an animation or gaming experience associated with the unique identifier of the wireless communication tag.

If the processor does not recognize the unique identifier, because the unique identifier of the wireless communication tag differs from those included in the plurality of recognized unique identifiers programmed within the processor, then the processor will prohibit access to the content programmed within the processor.

In addition, the processor may receive the signal indicative of the band being secured to the housing of the wearable computing device via a connection point. The connection point may include a pressure sensor, a proximity sensor, a photoelectric sensor, a vibration sensor, a contact sensor, an electrical solution, or a combination thereof.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with this description, serve to explain the related principles.

### BRIEF DESCRIPTION OF THE DRAWINGS

Detailed discussion of embodiments directed to one of ordinary skill in the art is set forth in the specification, which makes reference to the appended figures, in which:
FIG. 1A illustrates a perspective view of an embodiment of a wearable computing device in accordance with aspects of the present disclosure, particularly illustrating the wearable computing device being worn on a wrist of a user.
FIG. 1B illustrates a side view of the wearable computing device of FIG. 1A in accordance with aspects of the present disclosure.
FIG. 2A illustrates a side view of an embodiment of a wearable computing device in accordance with aspects of the present disclosure, particularly illustrating a band detached from a housing of the wearable computing device.
FIG. 2B illustrates a side view of an embodiment of a wearable computing device in accordance with aspects of the present disclosure, particularly illustrating a band secured to a housing of the wearable computing device at a connection point.
FIG. 3 illustrates a block diagram of an embodiment of a computing system of a wearable computing device in accordance with aspects of the present disclosure.
FIGS. 4A-4D illustrate various steps of an embodiment of a process of preventing counterfeit unlocking of a wearable computing device in accordance with aspects of the present disclosure.
FIG. 5 illustrates a flow diagram of an embodiment of a method of preventing counterfeit unlocking of a wearable computing device in accordance with aspects of the present disclosure.

Repeated use of reference characters in the present specification and drawings is intended to represent the same or analogous features or elements of the present technology.

### DETAILED DESCRIPTION

Reference will now be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

Current methods of preventing counterfeit unlocking use electrical technology, such as an integrated circuit, to verify the integrity of a component. Alternatively, metal pins are often built into the band to prevent counterfeit unlocking of a wearable computing device. However, both of these designs introduce certain considerations. For example, integrated circuitry requires the processor of the device to have additional capabilities, including the ability to detect and read signals regarding an electrical connection. Additionally, manufacturing the integrated circuit can require complex and costly hardware, which is subject to malfunction in the presence of water or moisture in the connection area.

Accordingly, the present disclosure is directed to a wearable computing device and method of using the same to prevent counterfeit unlocking of the wearable computing device. In particular, the method includes receiving, via a processor of the wearable computing device, a signal indicative of a band being secured to a housing of the wearable computing device. For example, in an embodiment, the band may include a first end securable to the housing at a connection point and a free, second end. As such, the connection point may include a pressure sensor, a proximity sensor, a photoelectric sensor, a vibration sensor, a contact sensor, an electrical solution, or a combination thereof, that can send the signal to the processor to indicate the band is connected to the housing.

Furthermore, the band includes a wireless communication tag having a unique identifier, e.g., which may be embedded in the free end of the band. In an embodiment, the wireless communication tag may include a near-field communication (NFC) tag, a Radio-Frequency Identification (RFID), or a combination thereof. Upon receipt of the signal, the method includes causing, via the processor, a visual cue to display on a display of the wearable computing device. The visual cue includes instructions that direct a user to engage the wireless communication tag with the housing so as to transmit the unique identifier to the processor. For example, the instructions may direct the user to fold or bend the free end of the band (containing the wireless communication tag) in a direction such that the free end of the band aligns with a graphic on the display of the wearable computing device.

In embodiments, upon such alignment, the method may also include receiving, via the processor, the unique identifier and determining whether the unique identifier corresponds to one of a plurality of recognized unique identifiers which are programmed in the processor. When the unique identifier corresponds to one of the plurality of recognized identifiers programmed in the processor, the processor is configured to cause a digital experience to display on the display. In certain embodiments, for example, the digital experience may include an animation or gaming experience associated with the unique identifier of the wireless communication tag. When the unique identifier does not correspond to one of the plurality of recognized unique identifiers, the processor can prohibit access to content programmed in the processor so as to prevent counterfeit unlocking of digital experiences on the wearable computing device.

### Example Devices and Systems

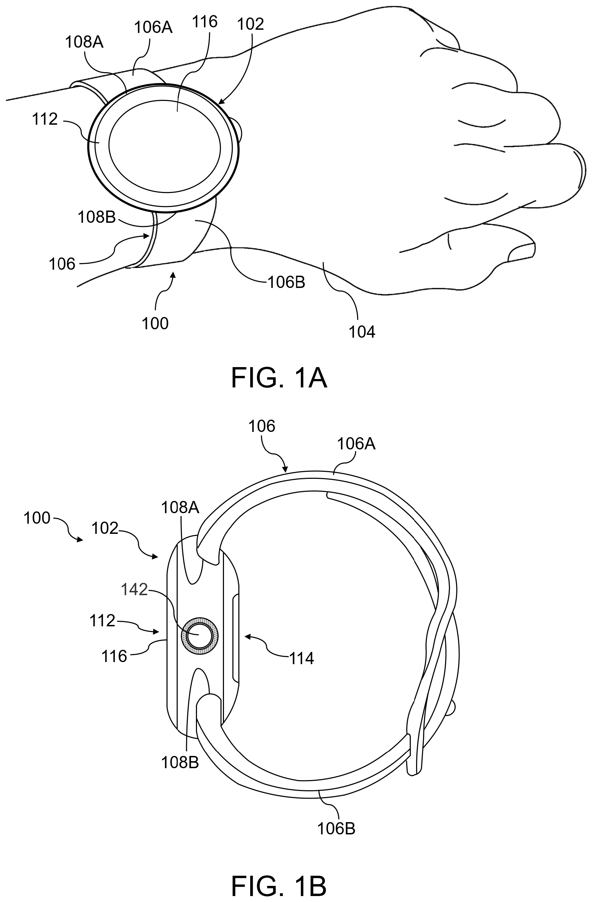

Referring now to the drawings, FIGS. 1A-1B illustrate various views of a wearable computing device 100 and components thereof according to the present disclosure. For instance, FIG. 1A illustrates a perspective view of the wearable computing device 100, particularly with the wearable computing device 100 being worn on a wrist of a user. FIG. 1B illustrates a side view of the wearable computing device 100 of FIG. 1A.

As generally shown in FIGS. 1A-1B, and as will be described below in greater detail, the wearable computing device 100 includes a housing 102 that contains electronics associated with the wearable computing device 100.

In addition, as shown in FIG. 1B, in some instances, the housing 102 includes an upper housing cover 112 and a rear housing cover 114 that together generally define an exterior of the wearable computing device 100. Particularly, as shown, the upper housing cover 112 generally defines an upper surface of the wearable computing device 100, whereas the rear housing cover 114 generally defines a rear surface of the wearable computing device 100.

The upper and rear housing covers 112, 114 are connectable to each other to at least partially enclose an interior volume of the wearable computing device 100. The interior volume of the wearable computing device 100 is configured to at least partially receive one or more components, such as the electronics. For instance, as shown in FIG. 1A, a display screen 116 may be received within the interior volume and viewable through at least the upper housing cover 112. For such purposes, in an embodiment, at least a portion of the upper housing cover 112 may be constructed of glass. Thus, polycarbonate, acrylic, glass, or similar, or the electronic display screen 116 may form part of the upper housing cover 112. Moreover, in an embodiment, the display screen 116 may cover an electronics package (not shown), which may also be housed within the housing 102. The display screen 116 may be any suitable display type, such as a touch screen, organic light emitting diode (OLED), liquid crystal display (LCD), and/or the like. The rear housing cover 114 of the housing 102 may be configured to be closest to a user when worn. For instance, the rear housing cover 114 may contact a dorsal wrist of a user when being worn by the user, as shown in FIG. 1A.

In some instances, as shown in FIG. 1A, the wearable computing device 100 may be worn on a user's forearm 104 like a wristwatch. Thus, as shown, the wearable computing device 100 may include a band 106, such as a wristband, having one or more parts, such as a first band portion 106A and a second band portion 106B (FIGS. 1A-2B), for securing the wearable computing device 100 to the user's forearm 104. However, it should be appreciated that the wearable computing device 100 may be worn at any other suitable location by a user, such as, for example, on an ankle, a torso, and/or the like.

Further, as shown in FIGS. 1A-2B, the housing 102 may include one or more buttons (such as rotary button 142) and one or more connection points (e.g., connection points 108A, 108B) at which the band 106 is securable to the housing 102. More specifically, as shown in FIGS. 1A-2B, each of the first and second band portions 106A, 106B of the band 106 may include an attached end 118 securable to a respective connection point(s) 108A, 108B and a free end 102. Thus, corresponding free ends of the first and second band portions 106A, 106B can be secured to each other to secure the wearable computing device 100 to the user's forearm 104.

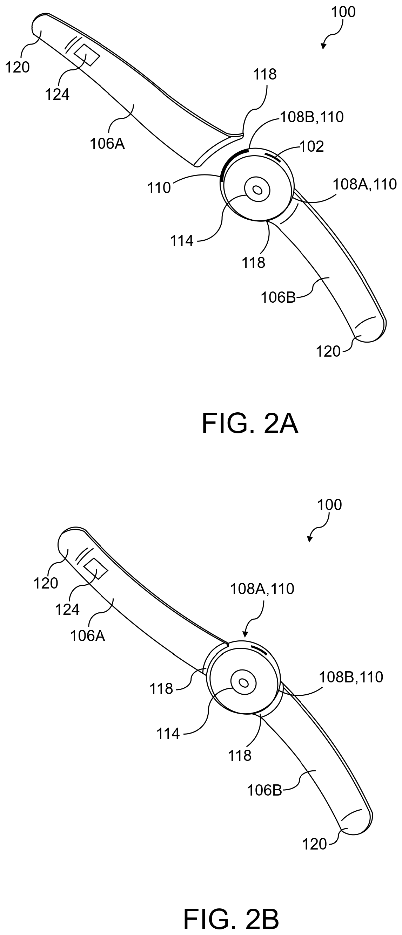

In addition, as shown in FIGS. 2A and 2B, the connection point(s) 108A, 108B may include one or more sensors 110 configured to detect whether the band 106 is secured to the housing 102. In such embodiments, the sensor(s) 110 may include a pressure sensor, a proximity sensor, a photoelectric sensor, a vibration sensor, a contact sensor, an electrical solution, and/or combinations thereof.

Furthermore, as shown in FIGS. 2A and 2B, the band 106 may include a wireless communication tag 124, e.g., that may be embedded or otherwise secured therein or thereto. More specifically, as shown, the wireless communication tag 124 may be embedded in the free end 120 of one of the band portions 106A, 106B of the band 106. While the wireless communication tag 124 is shown as being present on the free end 120 of the band 106, one of the ordinary skill would recognize that the wireless communication tag 124 may be present in any suitable location along a length of the band 106. In particular embodiments, the wireless communication tag 124 may be a near field communication (NFC) tag, a Radio-Frequency Identification (RFID), or a combination thereof.

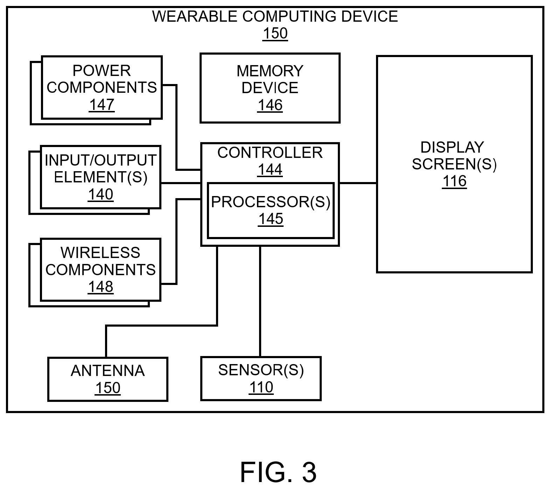

Referring now to FIG. 3, a block diagram of a computing system 150 of a wearable computing device, such as the wearable computing device 100 illustrated in FIG. 1A-2B, is illustrated according to the present disclosure. As shown, the computing system 150 may include at least one controller 144. In an embodiment, the controller(s) 144 may include one or more processors 145. The processor(s) 145 may be a central processing unit (CPU) or graphics processing unit (GPU) for executing instructions that can be stored in a memory device 146, such as flash memory or DRAM, among other such options. For example, in an embodiment, the memory device 146 may include RAM, ROM, FLASH memory, or other non-transitory digital data storage, and may include a control program comprising sequences of instructions which, when loaded from the memory device 146 and executed using the controller(s) 144, cause the controller(s) 144 to perform the functions that are described herein.

As would be apparent to one of ordinary skill in the art, the computing system 150 can include many types of memory, data storage, or computer-readable media, such as data storage for program instructions for execution by the controller or any suitable processor. The same or separate storage can be used for images or data, a removable memory can be available for sharing information with other devices, and any number of communication approaches can be available for sharing with other devices.

Furthermore, as shown in FIG. 3, the computing system 150 may further include one or more user interface elements, such as the display screen 116 of the wearable computing device 100, an antenna 150, and/or one or more additional input/output (I/O) devices 140 configured to allow the wearable computing device 100 to receive conventional inputs from the user. These conventional inputs can include, for example, a button (such as the rotary button 142 of FIG. 1B), wheel, joystick, keyboard, mouse, keypad, and/or any other such device or element whereby a user can input a command to the wearable computing device 100. In some embodiments, the I/O device(s) 140 may additionally, or alternatively, include a microphone or other audio capture element that accepts voice or other audio commands. For example, in particular embodiments, the wearable computing device 100 may be controllable through a combination of visual and audio commands, such that a user can control the wearable computing device 100 without having to specifically contact an I/O element of the wearable computing device 100. In certain embodiments, the I/O elements 140 may include one or more sensors, such as sensor(s) 110, which may include, but are not limited to temperature sensor(s), humidity sensor(s), pressure sensor(s), microphone(s), biometric sensor(s), motion sensors, and/or any other sensor described herein.

The computing system 150 also includes one or more power components 147, such as a battery operable to be recharged, for powering one or more components of the wearable computing device 100 described above. The power component(s) 147 may be at least partially positioned within the interior volume of the wearable computing device 100.

The computing system 150 may also include one or more wireless components 148 operable to allow the controller(s) 144 to communicate with one or more electronic devices within a communication range of the particular wireless channel. The wireless channel can be any appropriate channel used to enable devices to communicate wirelessly, such as Bluetooth, cellular, NFC, Ultra-Wideband (UWB), or Wi-Fi channels. It should be understood that the computing system 150 can have one or more conventional wired communications connections as known in the art.

Moreover, the computing system 150 of the wearable computing device 100 may equipped with one or more security measures to ensure counterfeit devices are incompatible with the computing system 150 of the wearable computing device 100 as further described herein. Accordingly, the present disclosure is directed to a wearable computing device and method of using the same to prevent counterfeit unlocking of the wearable computing device.

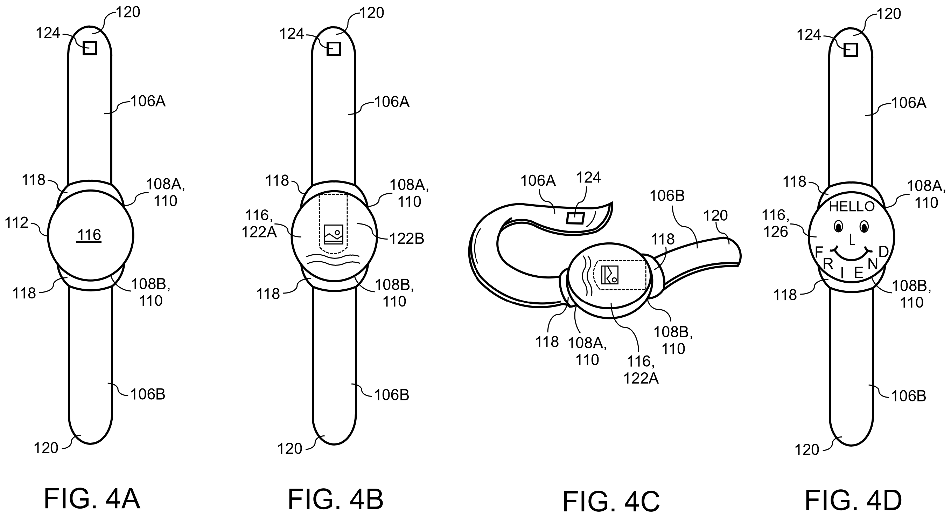

Referring now to FIGS. 4A-4D, a schematic diagram of an embodiment of a process 130 of preventing counterfeit unlocking of a wearable computing device 100 is illustrated according to the present disclosure. As shown in FIG. 4A, the process 130 includes detecting that the band 106 is secured to the housing 102 via the connection point(s) 108A, 108B. For example, in an embodiment, the sensor(s) 110 located at the connection point(s) 108A, 108B may transmit a signal to the processor 145 indicative of whether the band 106 is secured to the housing 102.

As shown in FIG. 4B, when the signal indicates the band 106 is connected to the housing 102, the processor 145 is configured to cause a visual cue 122 to display on the display screen 116 of the wearable computing device 100. In further embodiments, the processor 145 may also be configured to receive a signal indicating the band 106 is not secured to the housing 102, in which case a different visual cue (not shown) may be displayed on the display screen 116. Such a visual cue may include, for example, instructions to the user to secure the band 106 to the housing 102 via the connection point(s) 108A, 108B.

As shown in FIGS. 4B and 4C, when the signal indicates the band 106 is connected to the housing 102, the visual cue 122 may include instructions 122A that direct a user to engage the wireless communication tag 124 with the housing 102 so as to transmit a unique identifier to the processor 145. More specifically, as shown in FIGS. 4B and 4C, the display screen 116 may include a graphic 122B guiding the user where to align the free end 102 of the band 106 on the display screen 116. In addition, as shown, the graphic may be outlined to create a template.

More specially, in an embodiment, the instructions 122A may include graphical or written instructions that direct the user to fold or bend the free end 102 of the band 106 (i.e., containing the wireless communication tag 124) in a direction such that the free end 102 of the band 106 aligns with the template on the display screen 116 of the wearable computing device 100. In such embodiments, the graphic and/or the template may have a shape that generally corresponds to a shape of the free end 102 of the band 106 such that it is clear to the user where to position the free end 102 of the band 106 atop the display screen 116. Thus, upon aligning the free end 102 of the band 106 on the display screen 116, the wireless communication tag 124 can communicate with the processor 145 (e.g., FIG. 4C). More specifically, in an embodiment, the wireless communication tag 124 is configured to transmit the unique identifier to the processor 145.

Furthermore, in an embodiment, the wireless communication tag 124 may be configured to send a radio wave to activate the antenna 150 in the housing 102, with the antenna 150 being communicatively coupled to the processor 145. In such embodiments, the processor 145 may emit a signal that powers the wireless communication tag 124 and allows the wireless communication tag 124 to transmit data. For example, the processor 145 is configured to receive the unique identifier from the wireless communication tag 124. In embodiments, the unique identifier may be associated with a corresponding digital experience which is programmed in the processor 145. In an embodiment, the unique identifier may be a Universally Unique Identifier (UUID). In another embodiment, the unique identifier may be a Globally Unique Identifier (GUID).

As such, in an embodiment, the processor 145 is configured to determine whether the unique identifier corresponds to one of a plurality of recognized unique identifiers which are programmed in the processor 145 (e.g., such as in a look-up table stored in the memory device 146). When the unique identifier corresponds to one of the plurality of recognized identifiers programmed in the processor 145, as shown in FIG. 4D, the processor 145 is further configured to cause a digital experience 126 to display on the display screen 116. In certain embodiments, for example, the digital experience 126 may include an animation or gaming experience associated with the unique identifier of the wireless communication tag 124. When the unique identifier does not correspond to one of the plurality of recognized unique identifiers, the processor 145 can prohibit access to content programmed in the processor 145 so as to prevent counterfeit unlocking of digital experiences on the wearable computing device 100.

### Example Methods

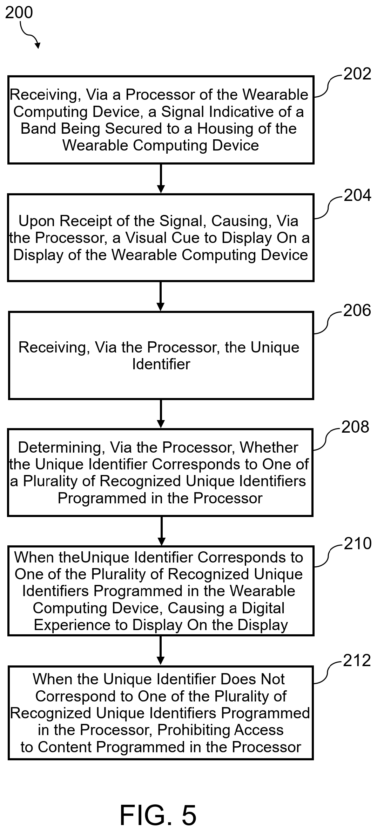

Referring now to FIG. 5, a flow diagram of one embodiment of a method 200 of preventing counterfeit unlocking of a wearable computing device is provided. In an embodiment, for example, the wearable computing device may be any suitable wearable computing device, such as the wearable computing device 100 described herein with reference to FIGS. 1A-4D. However, it should be appreciated that the disclosed method 200 may be implemented with any other suitable wearable computing device having any other suitable configurations and/or with any other suitable system. In addition, although FIG. 5 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, added, and/or adapted in various ways without deviating from the scope of the present disclosure.

As shown at (202), the method 200 may include receiving, via a processor of the wearable computing device, a signal indicative of a band being secured to a housing of a wearable computing device. As shown at (204), the method 200 may include, upon receipt of the signal, causing, via the processor, a visual cue to display on a display of the wearable computing device. As shown at (206), the method 200 may include receiving, via the processor, the unique identifier. As shown at (208), the method 200 may include determining, via the processor, whether the unique identifier corresponds to one of a plurality of recognized unique identifiers programmed in the processor. As shown at (210), the method 200 may include, when the unique identifier corresponds to one of the plurality of recognized unique identifiers programmed in the processor, causing a digital experience to display on the display. As shown at (212), the method 200 may include, when the unique identifier does not correspond to one of the plurality of recognized unique identifiers programmed in the processor, prohibiting access to content programmed in the processor.

### Additional Disclosure

The technology discussed herein makes reference to servers, databases, software applications, and other computer-based systems, as well as actions performed by, and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present disclosure has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations and/or additions to the present disclosure as would be readily apparent to one of ordinary skill in the art. For instance, features illustrated or described as part of one embodiment can be used with another embodiment to yield a still further embodiment. Thus, it is intended that the present disclosure covers such alterations, variations, and equivalents.

## Claims

1. A method of preventing counterfeit unlocking of a wearable computing device, the method comprising:
receiving, via a processor of the wearable computing device, a signal indicative of a band being secured to a housing of the wearable computing device, the band comprising a wireless communication tag, the wireless communication tag comprising a unique identifier;
upon receipt of the signal, causing, via the processor, a visual cue to display on a display screen of the wearable computing device, the visual cue comprising instructions that direct a user to engage the wireless communication tag with the housing so as to transmit the unique identifier to the processor;
receiving, via the processor, the unique identifier;
determining, via the processor, whether the unique identifier corresponds to one of a plurality of recognized unique identifiers programmed in the processor;
when the unique identifier corresponds to one of the plurality of recognized unique identifiers programmed in the processor, causing a digital experience to display on the display screen; and
when the unique identifier does not correspond to one of the plurality of recognized unique identifiers programmed in the processor, prohibiting access to content programmed in the processor.

2. The method of claim 1, wherein the wireless communication tag comprises at least one of a near-field communication, NFC, tag, a Radio-Frequency Identification, RFID, or a combination thereof.

3. The method of claim 1 or 2, wherein the unique identifier comprises at least one of a Universal Unique Identifier, UUID, or a Globally Unique Identifier, GUID.

4. The method of any one of claims 1 to 3, wherein the band comprises at least one band portion, the at least one band portion comprising a first end and a second end, and wherein the first end of the at least one band portion is attached to the housing of the wearable computing device and the second end of the at least one band portion is a free end, the free end comprising the wireless communication tag.

5. The method of claim 4, wherein the visual cue further comprises instructions to direct the user to fold the band in a direction so as to touch the free end of the band comprising the wireless communication tag to the display screen of the wearable computing device, instructions to direct the user to secure the band to the housing of the wearable computing device, or a combination thereof.

6. The method of claim 4 or 5, wherein the first end of the at least one band portion is secured to the housing at a connection point comprising a sensor for detecting whether the band is secured to the housing.

7. The method of claim 6, further comprising receiving, via the processor, a signal indicative of the band being attached to the housing at the connection point from the sensor.

8. The method of any one of the preceding claims, wherein the digital experience comprises an animation or gaming experience associated with the unique identifier of the wireless communication tag.

9. The method of any one of the preceding claims, wherein the wireless communication tag is embedded in the band.

10. A wearable computing device, comprising:
a housing comprising a display screen;
a band securable to the housing at a connection point, the band comprising a wireless communication tag, the wireless communication tag comprising a unique identifier; and
a processor housed within the housing, the processor configured to implement a plurality of operations configured to prevent counterfeit unlocking of the wearable computing device, the plurality of operations comprising:
receiving a signal indicative of the band being secured to the housing;
upon receipt of the signal, causing a visual cue to display on the display screen, the visual cue comprising instructions to direct a user to engage the wireless communication tag with the housing so as to transmit the unique identifier to the processor;
receiving the unique identifier;
determining whether the unique identifier corresponds to one of a plurality of recognized unique identifiers programmed therein;
when the unique identifier corresponds to one of the plurality of recognized unique identifiers, causing a digital experience to display on the display screen; and
when the unique identifier does not correspond to one of the plurality of recognized unique identifiers, prohibiting access to content programmed in the processor.

11. The wearable computing device of claim 10, wherein the band comprises at least one band portion, the at least one band portion comprising a first end and a second end, and wherein the first end of the at least one band portion is attached to the housing of the wearable computing device and the second end of the at least one band portion is a free end, the free end comprising the wireless communication tag.

12. The wearable computing device of claim 11, wherein the visual cue further comprises instructions to direct the user to fold the band in a direction so as to touch the free end of the band comprising the wireless communication tag to the display screen of the wearable computing device.

13. The wearable computing device of claim 11 or 12, wherein the first end of the at least one band portion is secured to the housing at a connection point comprising a sensor for detecting whether the band is secured to the housing.

14. The wearable computing device of claim 13, further comprising receiving, via the processor, a signal indicative of the band being attached to the housing at the connection point from the sensor.

15. The wearable computing device of any one of claims 10 to 14, wherein
the connection point comprises at least one of a pressure sensor, a proximity sensor, a photoelectric sensor, a vibration sensor, a contact sensor, an electrical solution, or a combination thereof; and/or
the wireless communication tag is embedded in the band.
